# EUROPEAN PATENT APPLICATION

(11) **EP 2 051 436 A1**
(43) Date of publication of application: **22.04.2009**
(21) Application number: 07800909.9
(22) Date of filing: 07.08.2007
(51) Int. Cl.: H04L 9/32, H04L 29/06, H04L 12/66

(54) **THE METHOD, DEVICE AND SYSTEM FOR ACCESS AUTHENTICATING**

(30) Priority: 08.08.2006 CN 200610109314
(71) Applicant: Huawei Technologies Co., Ltd., Longgang District, Shenzhen Guangdong 518129 (CN)
(72) Inventor: ZHENG, Ruobin, Shenzhen, Guangdong 518129 (CN)
(74) Representative: Gulde Hengelhaupt Ziebig & Schneider
(86) International application number: PCT/CN2007/070429
(87) International publication number: WO 2008/019615

(57) **Abstract**

The method, apparatus and system for access authentication include: the network node sends the authentication information to the authentication server, the authentication server deals with the authentication process. When the authentication is successful, the network node is trusted. The UE may send authentication information through the trust node to the authentication server, and the authentication server deals with the authentication process. At the same time, the trust node controls the UE according to the information, which is from the policy server. So the NSP may account to the different users according to the different services, and prevent the illegal action, and the network node may deal with local monitoring according to the policy information.

## Description

### FIELD OF THE INVENTION

The present invention relates to network communication technology, and especially relates to a method, apparatus and system for implementing access authentication.

### BACKGROUND

Currently, network architecture may be categorized into fixed network architecture, mobile network architecture and hybrid architecture of fixed network and mobile network. These three manners of network architecture are broadly applied respectively because of their respective advantages in different scenarios. For example, the fixed network, such as Digital Subscriber Line (DSL), is mainly used at home or locations with fixed office, because it cannot be moved during using and signal thereof is relatively good; the mobile network is mainly used in public vehicles, such as cars, trains, ships, or airplanes, because it may be used in moving status; the hybrid architecture of fixed network and mobile network is mainly used in the scenarios considering both the mobile capacity of network and quality of signals because it collects the advantages of the fixed and mobile network.

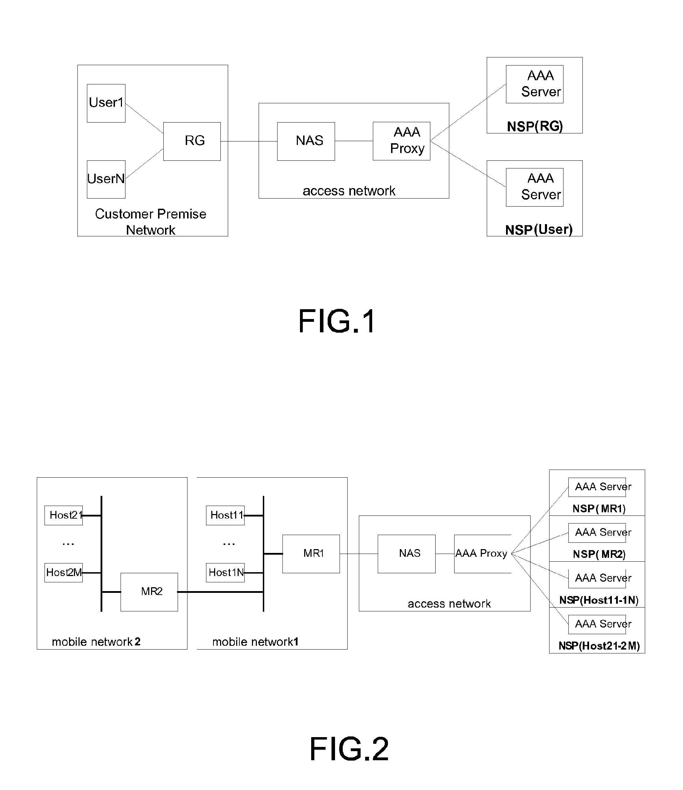

Figure 1 illustrates the structure diagram of the architecture of fixed network that is broadly used at present.

A fixed network shown in Figure 1 includes a Customer Premise Network (CPN), an access network and a single-level access network composed of a plurality of networks to which Service Provider (NSP) belongs. A single-level access network is an access network without network nest, i.e. when a user connects to a network node; the network node directly connects to the access network. The fixed network may be a single-level access network, or may be a multi-level access network. CPN is composed of fixed network node (RG) and different users under the RG. The main purpose of the CPN is to connect various communication terminals to which users belong. Access network includes Network Access Server (NAS) and Authentication, Authorization, Accounting proxy (AAA proxy). The main function of the access network is to act as a bridge between users and service providers, i.e., enabling a user to successfully connect to a required network service through authorization and meanwhile to account flow and fee based on usage of the network by the user; the network to which NSP belongs includes different network service content providers and an AAA server directing to each provider. Each RG and each User may have different requirements on network service, i.e., they may belong to different NSPs.

Figure 2 illustrates the structure diagram of the architecture of mobile network that is broadly used at present.

The mobile network shown in Figure 2 includes a mobile network 1 or multi-level mobile networks nested within each other (for example, mobile network 1 and mobile network 2 being nested with each other as shown in Figure 2), an access network and a multi-level access network composed of a plurality of networks to which NSP belongs. The multi-level access network is an access network with network nesting structure, i.e., a network node connected to a user indirectly connects to the access network via other network node. The mobile network may be a multi-level access network, or a single-level access network. Each mobile network in the multi-level mobile network nested within each other includes mobile network node (MR) and individual Host apparatus under the MR. Each mobile network is used to connect each mobile host and various mobile communication terminals homed by the mobile network. The access network includes NAS and AAA proxy. The access network is mainly used as a bridge between users and service providers in mobile communication, i.e. enabling the user to successfully connect to the required network service through authorization and meanwhile to account flow and fee based on the usage of network by the user. The networks to which the NSP belongs include network service content providers, and for the Authentication, Authorization, Accounting server (AAA server) of each provider, each level of MR and each host under the MR may have different requirements on network service, i.e., they may belong to different NSPs.

One application scenario of the mobile network is that the multi-level mobile network nested within each other may be located in public vehicles, such as cars, trains, ships or planes. MR1 is provided by the NSP (MR1) to which the MR1 belongs and mounted within the public vehicle. Host 11 to Host 1N are N communication devices carried by the passengers of the public vehicle. Host 11 to Host 1N are provided by the NSP (Host 11-1N) to which the Host 11- Host 1N belong. Suppose that another passenger carries a laptop MR2, takes the public vehicle and connects into a mobile network 1, the MR2 is provided by the NSP (MR2) to which the MR2 belongs and the MR2, together with various communication devices Host 21 to Host 2M carried by the passenger (such as wireless earphone, wireless video glasses and PDA etc.), form a Personal Area Network (PAN), Host 21 to Host 2M are provided by the NSP (Host 21-2M) to which the Host 21- Host 2M belong, and access MR1 via MR2.

Not only in a fixed network, a mobile network but also in a hybrid network of a fixed network and a mobile network, users contact the network side via network devices. In a network system, several network devices connect to the network side, and several users connect to each of the network devices.

In the conventional network system, the network devices connected to the network sided are configured by operators, so that trust levels of the network devices are predetermined by the operators, i.e., when a network is determined, all of the network devices are trusted network devices. In view of a network system, the network device may be regarded as a node in the network, and a trusted network device may be regarded as a trusted node.

A trusted node may make a trust determination to users connected thereto, and the network side may send some network control parameters to the trusted node to facilitate a better control and management to the users connected to the trusted node by operators.

As to the trusted node, the users connected thereto may execute a node cascaded authentication, i.e. a user connected to the trusted node may become a trusted user through the trusted node to which it connected. In particular, the trusted node does not require the user connected thereto to send an access authentication request message but directly makes a trust determination to the user connected to the trusted node, determines whether it may become a trusted user. If the user satisfies the conditions of a trusted user, the trusted node allows the user to be a trusted user; otherwise, the user is not allowed to become a trusted user.

However, as to current network system, due to the development of network technology, a network device may be added into a network system after the determining of the network. In other words, the added network device has not passed an authentication for authorization, which is an un-trusted node.

As to an un-trusted node, the un-trusted node may not make a trust judgment on the users connected thereto, the users connected thereto may not become a trusted user by means of sending to the un-trusted node an access authentication request message, and the network side will not send the network control parameters to the un-trusted node. Thus, after the network system is set, not only the users connected to the un-trusted node may not become a trusted user, but the un-trusted node may not become a trusted node as well.

In this case, as to an un-trusted node, upon the determination of the network system, the un-trusted node may not be converted to a trusted node, resulting in that the network side may not implement a security monitor and service statistics for the users connected to the un-trusted node, which goes against the control and management to the un-trusted node by operators. Thus, a node authentication solution is required to convert an un-trusted node into a trusted node.

Currently, as to the fixed network shown in Figure 1 (e.g. a DSL network), the following three solutions of inter-network node authentication may be used to implement corresponding operations for node authentication.

(1) One corresponding solution one for node authentication is: only an RG is under a simple line authentication, while the users connected to the RG (User1-UserN) may not be authenticated.

In the progress to implement the present invention, the inventor found out that the solution one involves the following disadvantages:

1. An NSP may not sense the existence of the users connected to the RG, i.e. the NSP may only count flow rate on the RG, and account and charge with regard to network service on the RG, but may not individually account and charge different users connected to the RG according to different services;

2. Because the NSP does not authenticate the users connected to the RG, the NSP is unable to perform security protection against counterfeit users;

3. As only the RG is under a simple line authentication, there is no related trust authentication to the RG, the RG is an un-trusted node, so that the RG may not obtain quality of service (QoS) policy related to the RG from a Policy Server, and thus the network system fails to perform a resource management control (e.g. uplink bandwidth control) according to a uniform QoS policy. Meanwhile, as to the network connection based service such as VoIP, the RG may not implement an Admission Control(AC) directing to VoIP according to the uniform QoS policy;

4. As the RG is an un-trusted node, the Admission Control List (ACL) related to the RG may not be obtained from authentication information, so that there is no control to a multicast authority of the users, and thus a fast channel switch control is impossible;

5. As the RG is an un-trusted node, a local quality of service monitor operation may not be applied to Service Level Agreement (SLA) nearby, so that the NAS is only able to monitor service flows of all of the users on the access node or Access Node (AN) that the NAS is located in, resulting in that the access node or Integrated Service Access Network (MSAN) that the NAS is located in becomes bottleneck of network service information.

(2) Another corresponding solution two for node authentication is: setting an RG as a three-layer route gateway; in the progress to implement the present invention, the inventor found that when the RG is a three-layer route gateway, i.e., if the users connected to the RG utilize common 802.1x authentication protocol, then as the 802.1x authentication protocol is a two-layer authentication protocol based on 802.3 or 802.11, the 802.1x authentication protocol is unable to pass through the three-layer route gateway RG.

(3) Still another corresponding solution three for node authentication is: setting an RG as a two-layer stationed gateway; in the progress to implement the present invention, the inventor found that when the RG is a two-layer stationed gateway, the RG itself is not necessary for authentication, i.e. if the users connected to the RG still utilize 802.1x authentication protocol, the RG must support an 802.1x authentication relay function, but existing RG devices normally do not support such authentication relay function. In addition, the inventor further found that the solution three also involves the disadvantages mentioned in the items 3, 4 and 5 in solution one for node cascaded authentication.

As to the mobile network as shown in Figure 2 (e.g. World Interoperability for Microwave Access (WiMAX) network), when an inter-network node cascaded authentication is executed, there are similar solution and disadvantages as the fixed network shown in Figure 1.

Thus, currently, there is no solution directing to the network node access authentication, no matter for a fixed network, a mobile network or a hybrid network of a fixed network and a mobile network, so that it is impossible to determine more trusted nodes in the network and then influence the development of communication traffic in the network, for example, if a user terminal accesses a network via an un-trusted node, it may not be authenticated, or an un-trusted node acted as a user access apparatus may not implement corresponding admission control function, etc.

### SUMMARY

Embodiments of the present invention provide method, apparatus and system for implementing access authentication, enabling an un-trusted node in a network system to become a trusted node through an access authentication, so that service providers may sense existence of users under a network, and then favorably developing related communication services in the network.

Embodiments of the invention provide a method for implementing access authentication. The method includes:
in a multi-level network, providing, by each level of the network, a gateway that is configured to connect a user of current level of the network and/or a gateway of a next level of the network;
initiating, by gateways of each level, an access authentication operation to a authentication server in sequence, the authentication server authentication the gateways level by level, and authorizing the gateway to be a trusted node when it passes the authentication.

Embodiments of the present invention provide a gateway including an authentication request transmitting unit, an authentication response receiving unit, and an authenticator processing unit or an authentication relay processing unit.

The authentication request transmitting unit is configured to send an authentication request message to the authentication server; the authentication response receiving unit is configured to obtain the result of the authentication returned by the authentication server, and determine whether the gateway passes the authentication; the authenticator processing unit is configured to, as an authenticator, process an authentication message in the process of the access authentication operation between the gateway and the authentication server; and the authentication relay processing unit is configured to relay the authentication message in the process of the access authentication operation between the gateway and the network access server.

Embodiments of the present invention provide a system for implementing access authentication, including: at least one gateway and an authentication server, the gateway initiating an access authentication operation to the authentication server, the authentication server executing the access authentication operation for a corresponding gateway, and returning result of the authentication to the gateway. The gateway that passes the authentication, as an authenticator or an authentication relay node, communicates with the authentication server that implements an access authentication operation for a user of a current level of the network and/or a gateway of a next level of the network that does not pass the authentication.

It may be seen from the solutions of the embodiments of the present invention, the embodiments of the present invention convert initial an un-trusted network node in an access network into a trusted node, and extend boundary of the access network, so as to enable an authentication server to activate a security protection against counterfeit users; and control the conversion of network nodes into trusted nodes in the access network, in order to solve the existing problems in the prior art.

### BRIEF DESCRIPTION OF THE DRAWINGS

Figure 1 is a schematic drawing of architecture of a fixed network;

Figure 2 is a schematic drawing of architecture of a mobile network;

Figure 3 is a schematic drawing illustrating a specific implementing process of an access authentication solution of a fixed network according to embodiments of the present invention;

Figure 4 is a schematic drawing illustrating a specific implementing process of an access authentication solution of a mobile network according to embodiments of the present invention;

Figure 5 is a schematic drawing illustrating a specific implementing process of an access authentication solution of a fixed network according to embodiments of the present invention;

Figure 6 is a schematic drawing illustrating a specific implementing process of an access authentication solution of a mobile network according to embodiments of the present invention;

Figure 7 is a schematic drawing illustrating a specific implementing structure of a system for implementing a network node access authentication according to embodiments of the present invention;

Figure 8 is a schematic drawing illustrating a specific implementing structure of a system for implementing a network node access authentication according to embodiments of the present invention.

### DETAILED DESCRIPTION

Embodiments of the present invention provide a method, apparatus and system for implementing access authentication, a network node initiates an access authentication operation to an authentication server to which it belongs, the authentication server performs an authentication process to the access authentication operation initiated by the network node; if there is a network node not passed authentication (i.e. an un-trusted node) required to be passed through between the network node initiating the access authentication operation and the authentication server, the corresponding un-trusted node initially needs to initiate an access authentication operation, and after the authentication, i.e. after it becomes an Authenticator or an authentication relay node of the network node or user connected thereto, it may process related messages in the access authentication operation initiated by the network node connected thereto.

In an embodiment of the present invention, corresponding network node that passed the authentication may further obtain corresponding control policy information, in order to perform control management for nodes or users that access the network via the network node. In particular, a policy server delivers admission control list and/or policy information to network nodes that passed authentication, so as to enable the network node to perform a multicast authority control for the user according to the received admission control list, and to perform quality of service control management for the user according to the received policy information.

In the embodiment of the present invention, in the case that said network node connects with users, after the network node becomes an Authenticator or authentication relay node of a user by means of authentication, the user connected to the network node initiates an access authentication operation via the network node or via the authenticator NAS by terms of the relay of the network node, and the authentication server executes an authentication process to the access authentication operation initiated by the user.

The embodiments of the present invention may be applied into a fixed network, may be applied into a mobile network, or may be applied into a fixed-mobile hybrid network. Below provides specific implementing solutions of the embodiments of the present invention being applied into a fixed network and a mobile network in combination of Figures.

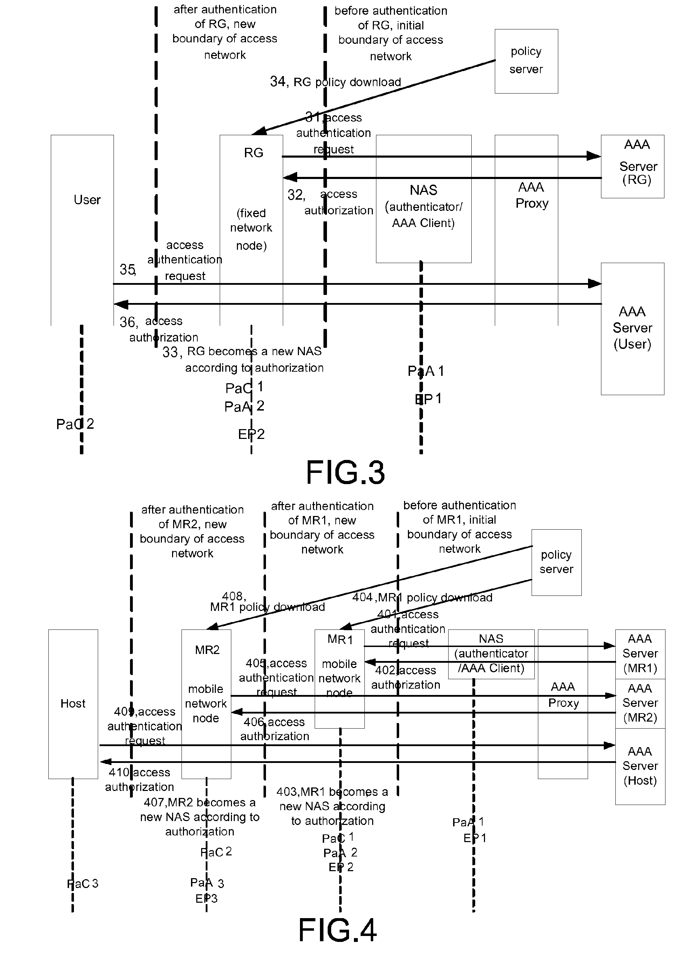

For the convenience of understanding of embodiments of the present invention, the specific implementing solutions of the present invention are explained in combination of Figures 3, 4 and 5.

A specific solution of a network node access authentication solution in a network of the embodiments of the present invention is shown in Figures 3 and 4. Hereinafter, the implement of an embodiment of the present invention will be illustrated in detail in view of the figures.

A specific solution of the network node access authentication solution in a fixed network of the embodiments of the present invention is shown in Figure 3, which includes the following steps of process:

Step 31: An RG, as a Supplicant, initiates an access authentication request message to an AAA Server to which the RG belongs;

The specific process for initiating an access authentication request message is: the access authentication request message initiated by the RG firstly passes an NAS of AAA Client that acts as an Authenticator in the access network, then the access authentication request message initiated by the RG is relayed by an AAA proxy in the access network, to be sent to the AAA Server to which the RG belongs;

The RG may also initiate the access authentication request message to the AAA Server to which the RG belongs, directly.

Step 32: Upon the receipt of the access authentication request message initiated by the RG by the AAA server to which the RG belongs, an access authentication process is performed for the RG;

In particular, after the authentication process is performed for the RG, if the RG passes the authentication, the AAA Server to which the RG belongs sends an access authorizing message to the RG, indicating that the AAA Server to which the RG belongs is authorized to access the network, i.e., allowing access of the RG to the network;

The access authorizing message sent by the AAA Server and received by the RG may include an address of an AAA Proxy obtained after the authentication of RG, or may selectively include an address of Network Automatic Configuration Proxy/Server(DHCP Proxy/Server) or an address/identifier of an AN, or an address of Network Automatic Configuration Proxy/Server (DHCP Proxy/Server) or an address/identifier of an AN;

Step 33: when the RG receives the access authorizing message sent by the AAA Server to which the RG belongs, the RG becomes a trusted node as to the access network after the authentication, making the boundary of the access network extends from between the RG and the NAS to between the user and the RG;

That is, according to the authorization of the AAA Server to which the RG belongs, the RG becomes a new NAS, i.e. the RG acts as an authenticator and an AAA Client; meanwhile, the RG becomes a DHCP Relay or Proxy;

Step 34: The Policy Server delivers an Admission Control List (ACL) and a QoS policy to the RG;

In particular, when the RG becomes a trusted node after the authentication, boundary of the access network extends from between the RG and NAS to between the user apparatus and the RG, the Policy Server delivers an ACL and QoS policy to the RG, so that the RG may perform a multicast authority control of the user according to the ACL;

Meanwhile, the RG may perform an uplink or downlink resource management, such as uplink bandwidth control etc., and a local monitor for a SLA, according to the QoS policy; as to the connection based service, such as VoIP, the RG may also execute an AC operation according to the QoS policy, so as to make the RG become a Session Initiation Protocol proxy (SIP proxy);

Step 35: The user initiates an access authentication request message to the AAA Server via the RG;

When the RG becomes a new NAS after the authentication, i.e. an authenticator, the RG allows the users connected thereto to relay via an AAA proxy through the RG, and initiate an access authentication request message to the AAA Server to which the user belongs; of course, the user may also directly initiate an access authentication request message to the AAA Server through the RG;

Step 36: After the AAA Server receives the access authentication request message initiated by the user connected to the RG, an access authentication process is performed for corresponding users; as such, the AAA Server may perform a security protection against counterfeit users;

In particular, when the AAA Server to which the user belongs receives the access authentication request message initiated by the user connected to the RG, after an authentication process, if the user passes the authentication, the AAA Server to which the user belongs initiates an access authorizing message to the user connected to the RG, indicating that the AAA Server to which the user belongs authorizes the user to access the network, i.e. allow the user to access the network; as such, the NSP may sense the existence of the user connected to the RG, so that the NSP may individually account and charge different users connected to the RG according to different services;

As to the access network, before the authentication of the RG, the RG is an un-trusted node, the initial boundary of the access network is located between the RG and the NAS; after the RG passes the authentication, the RG becomes a trusted node, and the boundary of the access network changes from between the RG and the NAS to between the RG and the user.

The authentication in the access authentication request message initiated by the RG may be based on Extended Identity Authentication Protocol (EAP), or based on other authentication protocol. When authentication in the access authentication request message initiated by the RG is based on EAP, in particular, various EAP based authentication protocols may be selected. For example, a 802.1x authentication protocol may be used for supporting the authentication, at this time, the user and the RG belong to the same IP Link, and the RG and the NAS belong to the same IP Link;

Using a Protocol for Carrying Authentication for Network Access (PANA) authentication protocol for support of the authentication, at this time, before the authentication of the RG, PANA Authentication Agent (PaA) and Enforcement Point (EP) is set in an authenticator access network NAS, as a PANA server and an execution unit, respectively; PANA Client (PaC) is set in the RG, as a client of the PANA; after the authentication of the RG, the RG becomes a new NAS, i.e. an authenticator, at this time, the PaA and EP may be set in the RG, as a PANA server and an execution unit, respectively, PaC may be set in a user apparatus, as a PANA client, the specific configuration is shown in Figure 3;

Using other EAP based authentication protocol for support of the authentication;

802.1x authentication protocol, PANA authentication protocol or other EAP based authentication protocol may be mixedly used to support the authentication operation, for example before the authentication of the RG, the RG may utilize a 802.1x authentication protocol, and after the authentication of the RG, the user may utilize a PANA authentication protocol; as another example, before the authentication of the RG, the RG may utilize a PANA authentication protocol, and after the authentication of the RG, the user may utilize a 802.1x authentication protocol.

A specific solution of the network node access authentication solution in a mobile network of the embodiments of the present invention is shown in Figure 4, which includes the following steps of process:

Step 401: MR1, as a applicant, initiates an access authentication request message to an AAA Server to which the MR1 belongs;

The specific process for initiating an access authentication request message is: the access authentication request message initiated by the MR1 firstly passes a NAS of AAA Client that acts as an Authenticator in the access network, then the access authentication request message initiated by the MR1 is relayed by an AAA proxy, to be sent to the AAA Server to which the MR1 belongs;

The MR1 may also initiate the access authentication request message to the AAA Server to which the MR1 belongs, directly.

Step 402: Upon the receipt of the access authentication request message initiated by the MR1 by the AAA server to which the MR1 belongs, an access authentication process is performed for the MR1;

In particular, after the AAA Server to which the MR1 belongs receives the access authentication request message initiated by the MR1, a corresponding authentication process is performed for the MR1; if the MR1 passes the authentication, the AAA Server to which the MR1 belongs sends an access authorizing message to the MR1, indicating that the AAA Server to which the MR1 belongs is authorized to access the network. The access authorizing message received by the MR1 may include an address of an AAA Proxy obtained after the authentication of MR1, an address of DHCP Proxy/Server;

Step 403: when the MR1 receives the access authorizing message sent by the AAA Server to which the MR1 belongs, the MR1 becomes a trusted node as to the access network after the authentication, making the boundary of the access network extends from between the MR1 and the NAS to between the user and the MR1;

That is, according to the authorization of the AAA Server to which the MR1 belongs, the MR1 becomes a new NAS, i.e. the RG acts as an authenticator and an AAA Client; meanwhile, the MR1 becomes a DHCP Relay or Proxy;

Step 404: The Policy Server delivers a QoS policy to the MR1;

In particular, when the MR1 becomes a trusted node after the authentication, boundary of the access network extends from between the MR1 and NAS to between the user apparatus and the MR1, the Policy Server delivers a QoS policy to the MR1, so that the MR1 may perform an uplink or downlink resource management, such as uplink bandwidth control etc., and a local monitor for a SLA, according to the QoS policy; as to the connection based service, such as VoIP, the MR1 may also execute an AC control according to the QoS policy, so as to make the MR1 become a SIP proxy; the Policy Server may also delivers an ACL to the MR1, and the MR1 may perform a multicast authority control of a host according to the ACL;

Step 405: A host connected to the MR1 or a mobile network MR2 to be nested may initiate an access authentication request message to the AAA Server via the MR1;

When the MR1 becomes a new NAS by passing the authentication, i.e. an authenticator, the MR1 allows the host connected thereto or the MR2 of the mobile network to be nested to relay via an AAA proxy, and initiate an access authentication request message to the AAA Server to which the host belongs or to the AAA Server to which the MR2 belongs;

The host connected to the MR1 or the mobile network MR2 to be nested may also directly initiate an access authentication request message to the AAA Server through the MR1;

Step 406: After the AAA Server receives the access authentication request message initiated by the MR2, an access authentication process is performed for the MR2;

In particular, when the AAA Server to which the MR2 belongs receives the access authentication request message initiated by the MR2, an corresponding authentication process is performed for the MR2, if the MR2 passes the authentication, the AAA Server to which the MR2 belongs initiates an access authorizing message to the MR2, indicating that the AAA Server to which the MR2 belongs authorizes the MR2 to access the network; The access authorizing message received by the MR2 may include an address of the AAA Proxy, or selectively include an address of DHCP Proxy/Server;

Step 407: When the MR2 receives the access authorizing message sent by the AAA Server to which the MR2 belongs, as to the access network, the MR2 becomes a trusted node, and boundary of the access network extends from between the MR1 and MR2 to between the User apparatus and the MR2;

That is, according to the authorization of the AAA Server to which the MR2 belongs, the MR2 becomes a new NAS, i.e. as an authenticator and AAA Client; meanwhile, the MR2 becomes a DHCP Relay or Proxy;

Step 408: A Policy Server delivers a QoS policy to the MR2;

When the MR2 becomes a trusted node after the authentication, boundary of the access network extends from between the MR1 and MR2 to between the user apparatus and the MR2, the Policy Server delivers a QoS policy to the MR2, so that the MR2 may perform an uplink or downlink resource management, such as uplink bandwidth control etc., and a local monitor for a SLA, according to the QoS policy; as to the connection based service, such as VoIP, the MR2 may also execute an AC control according to the QoS policy, so as to make the MR2 become a SIP proxy; the Policy Server may also delivers an ACL to the MR2, and the MR2 may perform a multicast authority control of a host according to the ACL;

Step 409: A host connected to the MR2 initiates an access authentication request message to the AAA Server;

When the MR2 becomes a new NAS by passing the authentication, i.e. an authenticator, the MR2 allows the host connected thereto to relay via an AAA proxy, and initiate an access authentication request message to the AAA Server to which the host belongs;

The host may also directly initiate an access authentication request message to the AAA Server through the MR2;

Step 410: The AAA Server performs an access authentication process to the host initiating the access authentication; as such, the AAA Server may perform a security protection against counterfeit users;

After the AAA Server to which the host belongs receives the access authentication request message initiated by the host connected to the MR2, an authentication process is performed for the corresponding host; if the host passes the authentication, then the AAA Server to which the host belongs initiates an access authorizing message to the host, indicating that the AAA Server to which the host belongs authorizes the host to access the network; as such, the NSP may sense the existence of the host connected to the MR2, so that the NSP may individually account and charge different hosts connected to the MR2 according to different services;

As to the access network, before the authentication of the MR1, the MR1 is an un-trusted node, the initial boundary of the access network is located between the MR1 and the NAS; after the MR1 passes the authentication, the MR1 becomes a trusted node, and the boundary of the access network changes from between the MR1 and the NAS to between the MR1 and the user. In the same way, as to the access network, before the authentication of the MR2, the MR2 is an un-trusted node, the initial boundary of the access network is located between the MR1 and the MR2; after the MR2 passes the authentication, the MR2 becomes a trusted node, and the boundary of the access network changes from between the MR1 and the MR2 to between the MR2 and the user of the MR2.

The authentication in the access authentication request message initiated by the RG may be based on Extended Identity Authentication Protocol (EAP), or based on other authentication protocol. When authentication in the access authentication request message initiated by the RG is based on EAP, in particular, various EAP based authentication protocols may be selected. For example, a 802.1x authentication protocol may be used for supporting the authentication, the host and the MR belong to the same IP Link, the MR1 and the MR2 belong to the same IP Link, and the MR1 and the NAS belong to the same IP Link;

Using a PANA authentication protocol for support of the authentication, before the authentication of the MR1, PaA and EP is set in an authenticator access network NAS, as a PANA server and an execution unit, respectively; PaC is set in the MR1, as a client of the PANA; after the authentication of the MR1, the MR1 becomes a new NAS, i.e. an authenticator, the PaA and EP may be set in the MR1, as a PANA server and an execution unit, respectively, PaC may be set in a host apparatus in the MR1 as well as the MR2, as a PANA client, after the authentication of the MR2, the MR2 becomes a new NAS, i.e. an authenticator, the PaA and EP may be set in the MR2, as a PANA server and an execution unit, respectively, PaC may be set in a host apparatus in the MR2, as a PANA client, the specific configuration is shown in Figure 4;

Using other EAP based authentication protocol for support of the authentication;

802.1x authentication protocol, PANA authentication protocol or other EAP based authentication protocol may be mixedly used to support the authentication operation, for example before the authentication of the RG, the RG may utilize a 802.1x authentication protocol, and after the authentication of the RG, the user may utilize a PANA authentication protocol; as another example, before the authentication of the RG, the RG may utilize a PANA authentication protocol, and after the authentication of the RG, the user may utilize a 802.1x authentication protocol.

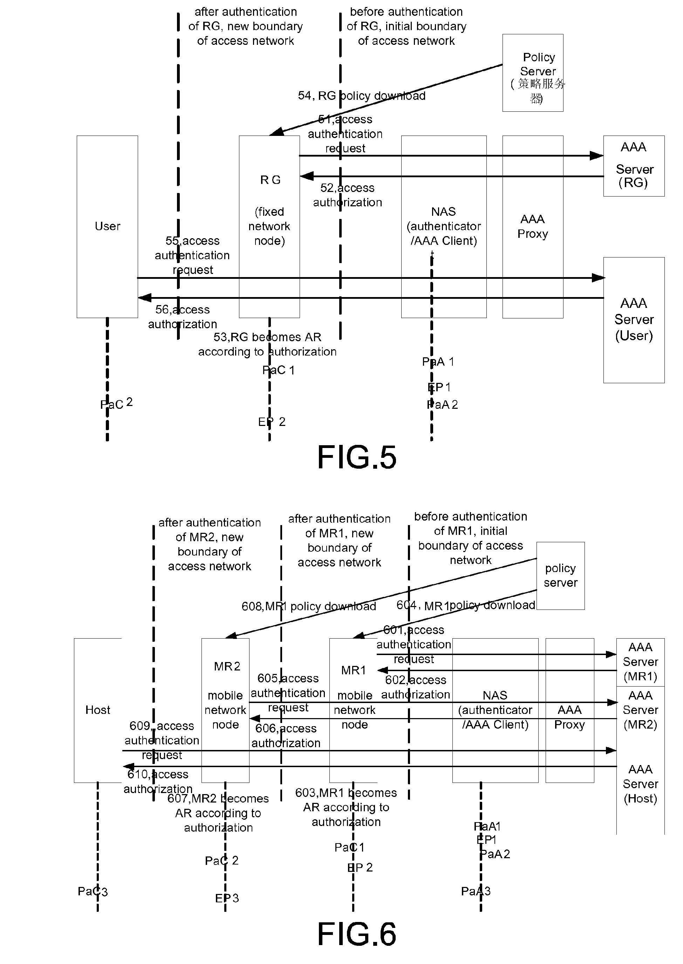

Another specific solution of the network node access authentication solution in a network of the embodiments of the present invention is shown in Figures 5 and 6. As compared with other solutions, in the present solution, after the network node passes the authentication, according to the authorization of the AAA Server to which the network node belongs, the network node becomes an Authenticator Relay (AR), rather than an authenticator; meanwhile, the NAS is a fixed authenticator, i.e. users or network nodes must communicate information with an authentication server via the authenticator NAS, and a network node passing the authentication may only be used as an authenticator relay between the user or network node and authenticator NAS.

Another specific solution of the embodiments of the present invention will be explained in detail below in combination of figures.

A specific solution of the network node access authentication solution in a fixed network of the embodiments of the present invention is shown in Figure 5, and the solution shown in Figure 5 is modified to the specific steps of the specific solution of the network node access authentication solution in a fixed network of the embodiments of the present invention shown in Figure 3, the modifications are as follows:

Step 52: Compared with Step 32, the change lies in: the access authorizing message sent by the AAA Server and received by the RG may include an address of Network Automatic Configuration Proxy/Server (DHCP Proxy/Server) or an address/identifier of an AN obtained after the authentication of RG;

Step 53: Compared with Step 33, the change lies in: according to the authorization of the AAA Server to which the RG belongs, the RG becomes an Authenticator Relay (AR); meanwhile, the RG becomes a DHCP Relay or Proxy;

Step 55: Compared with Step 35, the change lies in: when the RG becomes an AR after the authentication, the user relays the access authentication request message to the Authenticator NAS through the RG connected thereto, and then the Authenticator NAS initiates an access authentication request message to the AAA Server to which the user belongs; at this time, the user may not directly initiate the access authentication request message to the AAA Server via the RG;

In this case, when a PANA authentication protocol is used for supporting the authentication, after the RG passes the authentication, the PaA is still set in the NAS, the EP may be set in the RG, as a PANA server and an execution unit, respectively, PaC may be set in a user apparatus, as a PANA client, the specific configuration is shown in Figure 5.

Another specific solution of the network node access authentication solution in a mobile network of the embodiments of the present invention is shown in Figure 6, and the solution shown in Figure 6 is modified to the specific steps of the specific solution of the network node access authentication solution in a mobile network of the embodiments of the present invention shown in Figure 4, the modifications are as follows:

Step 602: Compared with Step 402, the change lies in: the access authorizing message received by the MR1 may include an address of DHCP Proxy/Server obtained after the authentication of MR1;

Step 603: Compared with Step 403, the change lies in: according to the authorization of the AAA Server to which the MR1 belongs, the MR1 becomes an AR node; meanwhile, the MR1 becomes a DHCP Relay or Proxy;

Step 605: Compared with Step 405, the change lies in: when the MR1 becomes an AR by passing the authentication, the MR1 firstly allows the host connected thereto or the MR2 of the mobile network to be nested to relay an access authentication request message to the Authenticator NAS via the MR1, and then the Authenticator NAS initiates the access authentication request message to the AAA Server to which the host belongs or to the AAA Server to which the MR2 belongs; at this time, the host connected to MR1 or the MR2 of the mobile network to be nested may not directly initiate the access authentication request message to the AAA Server via the MR1;

Step 606: Compared with Step 406, the change lies in: the access authorizing message received by the MR2 may include an address of DHCP Proxy/Server after the MR2 passes the authentication;

Step 607: Compared with Step 407, the change lies in: according to the authorization of the AAA Server to which the MR2 belongs, the MR2 becomes an AR node; meanwhile, the MR2 becomes a DHCP Relay or Proxy;

Step 609: Compared with Step 409, the change lies in: when the MR2 becomes an AR by passing the authentication, the MR2 firstly allows the host connected thereto to relay an access authentication request message to the Authenticator NAS via the MR2, and then the Authenticator NAS initiates the access authentication request message to the AAA Server to which the host belongs; at this time, the host may not directly initiate the access authentication request message to the AAA Server to which the host belongs via the MR2.

In this case, when a PANA authentication protocol is used for supporting the authentication, after the authentication of the MR1, the PaA is still set in the NAS, EP may be set in the MR1, as a PANA server and an execution unit, respectively, PaC may be set in a host apparatus in the MR1 as well as the MR2, as a PANA client, after the authentication of the MR2, the PaA is still set in the NAS, the EP may be set in the MR2, as a PANA server and an execution unit, respectively, PaC may be set in a host apparatus in the MR2, as a PANA client, the specific configuration is shown in Figure 6.

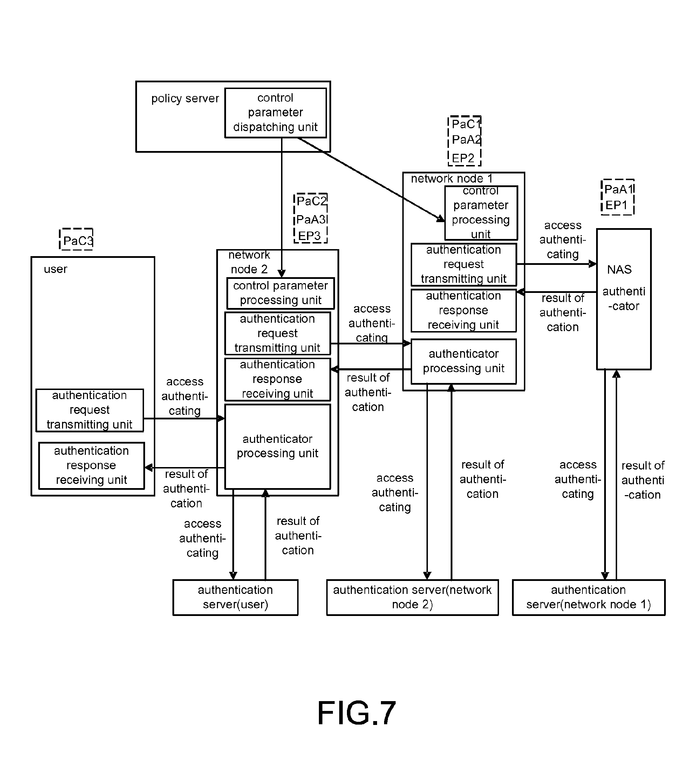

Directing to the specific solution, the embodiments of the present invention further provides a system for implementing access authentication, the specific structure of the system is shown in Figure 7, which includes: at least one network node and an authentication server, The network node initiates an access authentication operation to the authentication server; the authentication server executes the access authentication operation for corresponding network node, and returns result of the authentication to the network node.

There shall be at least one above-mentioned network node in the network nodes in the system. The network node particularly includes the following units:
an authentication request transmitting unit, configured to send an authentication request message to the authentication server to which the network node belongs; in order to initiate an access authentication operation, the specific manner for initiating the access authentication operation has been described before, which is omitted for brevity;
an authentication response receiving unit, configured to obtain the result of the authentication returned by the authentication server, i.e. receive the authentication response message returned by the authentication server, and determine whether the network node passes the authentication according to contents of the message.

When the network node that becomes a trusted node acts as an authenticator in the process of the access authentication operation, the network node may further include an authenticator processing unit, that is configured to process an authentication message in the process of the access authentication operation between the network node and the authentication server, i.e. when the network node itself passes the authentication and becomes a trusted node, this network node may be regarded as an authenticator, i.e. may provide other network nodes or users with a process related to messages in the process of the access authentication operation.

In the system according to the embodiments of the present invention, in order to enable users to initiate an access authentication operation through a trusted node, an authentication request transmitting unit and an authentication response receiving unit are needed to be provided on corresponding users required to connect to the network. The user utilizes the authentication request transmitting unit to initiate an access authentication operation via the trusted node, the user utilizes the authentication response receiving unit to obtain result of the authentication returned by the authentication server via the trusted node, and determine whether the use passes the authentication. The trusted node may be a network node or a plurality of cascaded network nodes.

The system for implementing access authentication according to the embodiments of the present invention may further include:
a control parameter delivering unit, located in the policy server and configured to delivers control parameters including an admission control list and policy information to trusted nodes;
a control parameter processing unit, located in the network node and configured to receive the control parameters delivered by the control parameter delivering unit, and perform a multicast authority control and a quality of service control for users by use of the control parameters.

When the access authentication according to the embodiments of the present invention uses a PANA authentication protocol for support of the authentication, the system for implementing access authentication according to the embodiments of the present invention may be:
the authentication request transmitting unit and the authentication response receiving unit are combined to be an network access authentication information carrying protocol client unit, i.e. PaC, that is located in the network node or may be optionally located in the user and is configured to support network nodes or users requiring a network access to initiate a network access authentication operation to the trusted node or the network access server;
   when the network node becomes a trusted node by authentication and authorization of a network access authentication information carrying protocol authentication proxy, the authenticator processing unit or network access server in the trusted node may act as a network access authentication information carrying protocol authentication proxy unit, i.e. PaA, that is configured to connect to the network access authentication information carrying protocol client unit in order to authenticate and authorize the network access authentication information carrying protocol client unit to obtain a network access service;
   when the network node becomes a trusted node by authentication and authorization of a network access authentication information carrying protocol authentication proxy, the authenticator processing unit or authentication relay processing unit may act as a network access authentication information carrying protocol execution unit, i.e. EP, that is configured to allow the access of an authorized user or network node, while reject the access of an un-authorized user or network node; the execution unit obtains information of the authorized user or network node from the network access authentication information carrying protocol authentication proxy.

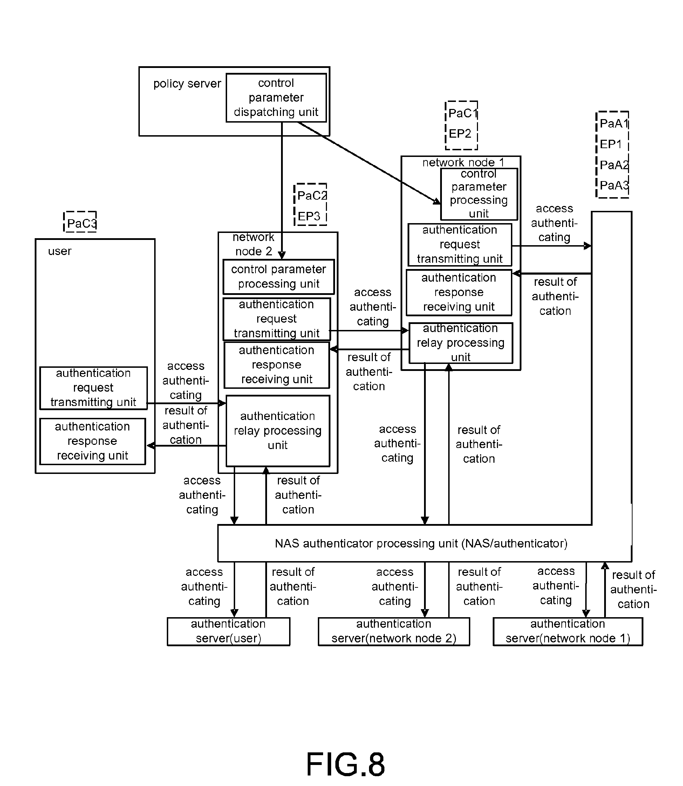

Directing to another specific solution, the embodiments of the present invention further provides a system for implementing access authentication, the specific structure of the system is shown in Figure 8, and as compared with structure chart of the system of solution according to the embodiments of the present invention shown in Figure 7, the present solution does the following modifications to the authenticator processing unit shown in Figure 7:

The authenticator processing unit shown in Figure 7 is replaced with the authentication relay processing unit shown in Figure 8, i.e. the apparatus for implementing authentication of apparatuses may further include an authentication relay processing unit, configured to relay, between a network node or a user and an authenticator NAS, an authentication message in the progress of an access authentication operation, and then process the authentication message in the access authentication operation between the authenticator NAS and an authentication server. Namely, in this instance, after a network node itself passes the authentication, the network node that passes the authentication is no longer regarded as an authenticator, but only an authentication relay node. In the whole progress of the authentication operation, the authenticator may only be the NAS, it is the authenticator NAS that provides processes related to messages in the progress of the access authentication operation for other network nodes or users, and the network node that passes the authentication only functions to relay messages.

Meanwhile, the specific solution also needs to include a network access server authenticator processing unit that is located in the NAS and configured to process authentication messages in the progress of the access authentication operation between a network access server and an authentication server to which the network node or user belongs.

Meanwhile, PaA in the present specific solution is set in the network access server acting as the authenticator, and EP is set in a trusted node.

In summary, the embodiments of the present invention relate to a method, apparatus and system for implementing access authentication, a network node initiates an access authentication operation to an authentication server to which the network node belongs, the authentication server performs an authentication process to the access authentication operation initiated by the network node; after the network node passes the authentication and is authorized to be a trusted node, the users connected to the trusted node initiates an access authentication operation via the trusted node, and an authentication server performs an authentication process to the access authentication operation initiated by the user. At the same time, the trusted node utilizes received control information delivered by a policy server to provide various control operations to the user. The embodiments of the present invention convert the initial un-trusted network node in an access network into a trusted node through a network node access authentication, so as to extend boundary of the access network, and bring five benefits as follows:

1. the authentication server may provide a security protection against counterfeit users in network nodes;

2. the authentication server may sense existence of users connected to a network node, so as to individually account and charge different users under the network node according to different services;

3. after the network node is converted to be an access network trusted node, a QoS policy may be obtained from a policy server, to perform a local resource management control, such as an uplink bandwidth control, according to a uniform QoS policy; as to a connection based service, such as VoIP, the network node may perform a local Admission Control (AC) according to the uniform QoS policy;

4. after the network node is converted to be an access network trusted node, an admission control list may be obtained from the policy server, enable the network node to perform a multicast authority control of users in local, so as to implement a quick operation of channel switch;

5. after the network node is converted to be an access network trusted node, a local monitor directing to SLA may be done nearby, making the monitors of service flows of all of the user unnecessary to be performed at the access node or AN that the NAS is located in, such that the access node or AN that the NAS is located in is simplified, which solves the bottleneck of the prior art, i.e. the monitors of service flows of all of the user are performed at the access node or AN that the NAS is located in.

In summary, the embodiments of the present invention enable NSP to individually account and charge different users under a network node according to different services and perform a security protection against counterfeit users; network nodes may perform corresponding management operation directing to a QoS policy and an admission control list and may perform local monitoring directing to a service level agreement, so as to solve the bottleneck of the prior art, i.e. the monitors of service flows of all of the user are performed at the access node or AN that the NAS is located in.

What described above are merely preferred embodiments of the present invention, but the protection scope of the present invention is not limited thereto. Those skilled in the art may easily contemplate any modification or substitute based on the technical contents revealed by the present invention, which shall be in the protection scope of the present invention. Thus, the protection scope of the present invention shall be based on the claims.

## Claims

1. A method for implementing access authentication, **characterized in** comprising:
in a multi-level network, providing, by each level of the network, a gateway that is configured to connect a user of a current level of the network and/or a gateway of a next level of the network; and
initiating, by gateways of each level in sequence, an access authentication operation to an authentication server, and by the authentication server, authenticating the gateways level by level and authorizing the gateway to be a trusted node when it passes the authentication.

2. The method according to claim 1, **characterized in that,** the process of the access authentication operation comprises:
sending, by the gateway, an access authentication request message to the authentication server;
determining, by the authentication server, whether to agree the access authentication request of the gateway based on an authentication process, upon receiving the access authentication request message sent by the gateway; and
delivering, by the authentication server, an access authorization message to the gateway, and authorizing the gateway to be a trusted node if the authentication server agrees the access authentication request of the gateway.

3. The method according to claim 2, **characterized in** further comprising:
the gateway that is authorized to be a trusted node becoming an authenticator for the access authentication of the user of the current level of the network and/or the gateway of the next level network, wherein the access authentication operation executed by the authenticator comprises:
executing, by the user of the current level of the network and/or the gateway of the next level of the network that does not pass the authentication , as the authenticator, the access authentication operation with the authentication server via the gateway; or
the gateway that is authorized to be a trusted node being able to become an authentication relay node of the network access authentication of the user of the current level of the network and/or the gateway of the next level network, as a gateway, wherein the access authentication operation of the authentication relay node comprises:
executing, by the authenticator and the authentication server, the access authentication operation after the access authentication operation sent by the user of the current level of the network and/or the gateway of the next level of the network that does not pass the authentication is relayed by the gateway acting as the authentication relay node

4. The method according to claim 3, **characterized in** further comprising:
delivering, by the authentication server, as the authenticator, an access authorizing message to the gateway of the next level of the network via the gateway after the access authentication of the gateway of the next level of the network succeeds; or
delivering, by the authentication server, as the authenticator, an access authorizing message to the gateway of the next level of the network via the gateway after the access authentication of the gateway of the next level of the network succeeds, wherein the access authorizing message is relayed to the gateway of the next level of the network though the gateway acting as the authentication relay node.

5. The method according to claim 3, **characterized in that,** after the gateway acts as an authenticator, the access authorizing message received by the gateway comprises: an address of an Authentication, Authorization, Accounting proxy, and optionally comprises: an address of a network automatic configuration proxy/server and/or an address or identifier of an access node;
or after the gateway acts as an authentication relay node, the access authorizing message received by the gateway comprises: an address of a network automatic configuration proxy/server, and optionally comprises: an address or identifier of an access node.

6. The method according to any one of claims 1-5, **characterized in that:**
if the user of the current level of the network and/or the gateway of the next level of the network needs to initiate the access authentication operation via a gateway that does not pass the authentication, the gateway that does not pass the authentication needs to initiate the access authentication operation first and become a trusted node by authentication, then the user of the current level of the network and/or the gateway of the next level of the network initiates the access authentication operation via the gateway that becomes a trusted node.

7. The method according to any one of claims 1-5, **characterized in** further comprising:
delivering, by a policy server or the authentication server, an admission control list and/or policy information to the gateway after the access authentication of the gateway succeeds, wherein the admission control list is adapted for performing a multicast authority control for users, and the policy information is adapted for providing a quality of service control management for the communication service of the user.

8. The method according to claim 7, **characterized in that,** providing a quality of service control management for the communication service of the user comprises at least one following:
performing an uplink or downlink resource management of information resources that are occupied by the communication service of the user;
performing a local quality of service monitor operation according to a service level agreement; and
performing an admission control operation according to policy information, for connection based services.

9. The method according to any one of claims 1-5, **characterized in that,** the access authentication operation is implemented based on an extended identity authentication protocol, and the extended identity authentication protocol comprises: 802.1x authentication protocol and/or authentication protocol for network access authentication information carrying protocol.

10. A gateway, **characterized in** comprising an authentication request transmitting unit, an authentication response receiving unit, and an authenticator processing unit or an authentication relay processing unit, wherein
the authentication request transmitting unit is configured to send an authentication request message to an authentication server;
the authentication response receiving unit is configured to obtain the result of the authentication returned by the authentication server, and determine whether the gateway passes the authentication;
the authenticator processing unit is configured to process an authentication message in the process of the access authentication operation between the gateway and the authentication server, as an authenticator; and
the authentication relay processing unit is configured to relay the authentication message in the process of the access authentication operation between the gateway and the network access server.

11. The gateway according to claim 10, **characterized in** further comprising:
a control parameter processing unit, configured to receive control parameters, and perform a multicast authority control and/or a quality of service control for users by use of the control parameters.

12. The gateway according to claim 10, **characterized in that:**
the authentication request transmitting unit and the authentication response receiving unit supporting an authentication protocol for a network access authentication information carrying protocol, and the authenticator processing unit supporting a 802.1x authentication protocol; or
the authentication request transmitting unit and the authentication response receiving unit supporting the 802.1x authentication protocol, and the authenticator processing unit supporting the authentication protocol for a network access authentication information carrying protocol; or
the authentication request transmitting unit, the authentication response receiving unit and the authenticator processing unit all supporting the authentication protocol for a network access authentication information carrying protocol or the 802.1x authentication protocol.

13. A system for implementing access authentication, **characterized in** comprising:
at least one gateway and an authentication server, wherein
the gateway initiates an access authentication operation to the authentication server, the authentication server executes the access authentication operation for a corresponding gateway, and returning result of the authentication to the gateway; and
the gateway that passes the authentication as an authenticator or an authentication relay node, communicates with the authentication server implementing an access authentication operation for a user of a current level of the network and/or a gateway of a next level of the network that does not pass the authentication.

14. The system according to claim 13, **characterized in** further comprising:
a network access server authenticator processing unit, configured to process authentication messages in the progress of the access authentication operation between the gateway and the authentication server to which the network node or user belongs.

15. The system according to claim 13 or 14, **characterized in** further comprising a control parameter delivering unit and a control parameter processing unit, wherein
the control parameter delivering unit located in the policy server or the authentication server is configured to deliver control parameters comprising an admission control list and policy information to trusted nodes; and
the control parameter processing unit located in the gateway is configured to receive the control parameters delivered by the control parameter delivering unit, and perform a multicast authority control and a quality of service control for users by use of the control parameters.

16. The system according to claim 13 or 14, **characterized in** further comprising:
the gateway acting as a network access authentication information carrying protocol client unit, and being configured to support the gateway to perform an access authentication operation; and
the gateway acting as a network access authentication information carrying protocol enforcement point, and being configured to enforce control information delivered from a network access authentication information carrying protocol authentication proxy.
